Europäisches Patentamt

European Patent Office

Office européen des brevets

(19)

(11) Veröffentlichungsnummer: **0 268 074 B1**

# EUROPÄISCHE PATENTSCHRIFT

(12)

(45) Veröffentlichungstag der Patentschrift:
20.06.90

(51) Int. Cl.⁵: **B65G 69/28**

(21) Anmeldenummer: 87115008.2

(22) Anmeldetag: 14.10.87

(54) Überladebrücke für Rampen.

(30) Priorität: 24.10.86 DE 3636162

(43) Veröffentlichungstag der Anmeldung:
25.05.88 Patentblatt 88/21

(45) Bekanntmachung des Hinweises auf die Patenterteilung:
20.06.90 Patentblatt 90/25

(84) Benannte Vertragsstaaten:
AT BE CH DE ES FR GB GR IT LI LU NL SE

(56) Entgegenhaltungen:
DE-A- 2 531 905
DE-A- 3 506 665
FR-A- 814 162
US-A- 3 006 008

(73) Patentinhaber: Alten, Kurt, Ringstrasse 14,
D-3015 Wennigsen(DE)

(72) Erfinder: Alten, Kurt, Ringstrasse 14,
D-3015 Wennigsen(DE)

(74) Vertreter: Depmeyer, Lothar, Auf der Höchte 30,
D-3008 Garbsen 1(DE)

**Beschreibung**

Die Erfindung betrifft eine Überladebrücke für Rampen nach dem Gattungsbegriff des 1. Patentanspruchs.

Überladebrücken dieser Art ermöglichen eine genaue, verkantungsfreie Führung der Verlängerung; sie sind in der DE-OS 25 31 905 beschrieben und auch in der DE-OS 35 06 665 offenbart. Bei diesen bekannten Brücken sind die Zahnräder einerseits und die zugehörigen Zahnstangen andererseits starr an der Brückenplatte bzw. ihrer Verlängerung gelagert. Um unter diesen Voraussetzungen eine ratterfreie Anordnung zu erreichen, wurde schon in der DE-OS 35 06 665 vorgeschlagen, den Zahnrädern ein diese von ihrer radialen Last befreiendes Stützrad zuzuordnen, das auf einer ebenen, geraden Laufbahn geführt ist. Dieses Stützrad ermöglicht zwar die Verwendung vergleichsweise grob hergestellter Zahnräder und Zahnstangen; ein nun einmal dabei erforderliches Spiel kann dieses Stützrad jedoch nicht verhindern.

Der Erfindung liegt im wesentlichen die Aufgabe zugrunde, bei eingangs erwähnten Überladebrücken durch eine besondere Anordnung der Zahnstangen eine einfache, spielfreie Verzahnung sicherzustellen.

Zur Lösung dieser Aufgabe ist erfindungsgemäss die Zahnstange im Bereich eines Endes um eine Querachse verschwenkbar gelagert und zudem liegt die Zahnstange frei auf dem zugehörigen Zahnrad auf.

Demgemäss ist nicht mehr ein genau festgelegter Abstand zwischen der Zahnstange und der Drehachse gegeben, und zwar unter Einhaltung eines bestimmten Spiels zwischen diesen Konstruktionsteilen, vielmehr liegen diese Teile aufgrund der Erfindung aufeinander, wobei in aller Regel eine Pressung vorgesehen ist, die sich aus dem Eigengewicht der schwenkbaren Zahnstange ( ggfs. im Zusammenwirken mit einer Rückenleiste ) ergibt. Damit ist in jedem Falle ein nachteiliges Spiel ausgeschaltet. Zugleich ergibt sich auch eine Vereinfachung bei der Herstellung und der Montage der Überladebrücke, weil durch die schwenkbare Lagerung der Zahnstange Ungenauigkeiten weitgehend ausgeglichen werden können. Eine Vereinfachung in der Konstruktion auch daraus, dass für die Zahnstange nur ein Drehbolzen od. dgl. für deren Lagerung ausreichend ist.

Um bei grösseren Kräften ein Herausheben der Zahnstange aus der Verzahnung des Zahnrades zu vermeiden, kann auf der Rückseite der Zahnstange ein Widerlager z.B. in Form einer einfachen Stange angeordnet werden, die quer zur Zahnstange verläuft.

Vorzugsweise wird auch die Zahnstange an der Verlängerung gelagert, und zwar so, dass sich das freie, nicht angelenkte Ende der Zahnstange in Richtung auf das hintere Ende der Brückenplatte erstreckt. Demgemäss wird also das vordere Ende der Zahnstange angelenkt, während die zu beiden Seiten der Überladebrücke befindlichen Zahnräder auf einer Welle angeordnet werden, die an der Brückenplatte zu lagern ist.

Weitere Einzelheiten der in den Ansprüchen definierten Erfindung werden anhand der Zeichnung erläutert, in der ein Ausführungsbeispiel der Erfindung dargestellt ist.

Es zeigen :

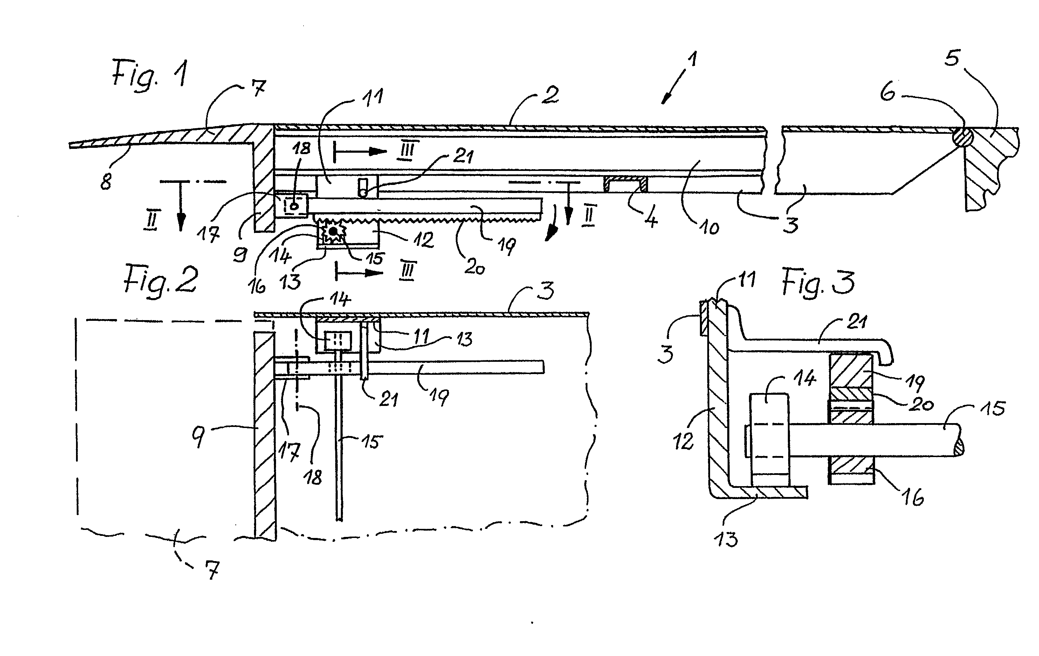

Fig. 1 einen Längsschnitt durch eine Überladebrücke für Rampen,
Fig. 2 einen Schnitt nach der Linie II - II von Fig. 1 und
Fig. 3 einen Schnitt nach der Linie III - III von Fig. 1.

Die Brückenplatte 1 weist eine Deckplatte 2, seitlich aussen gelegene senkrechte Versteifungen 3 und einen diese verbindenden Quertrager 4 auf, sie ist an ihrem hinteren, der Rampe 5 zugekehrten Ende mit einer Schwenkachse 6 versehen und hat am vorderen Ende eine in Brückenlängsrichtung hin- und herbewegbare, meist mittels Arbeitszylinder verfahrbare Verlängerung 7, über die sich die Brückenplatte 1 auf der zu be. bzw. entladenden Plattform eines Fahrzeuges abstützen kann. Die Verschwenkung der Brückenplatte 1 erfolgt mit einem nicht dargestellten Arbeitszylinder, der an dem Querträger 4 angreifen kann.

Die Verlängerung 7 hat ein spitz auslaufendes Auflageteil 8 und daran ein senkrechtes Querteil 9, von dem aus sich mehrere, der Führung und Halterung der Verlängerung 7 dienende Profile 10 kammartig nach hinten erstrecken, die mit geringem Spiel zwischen der Deckplatte 2 und dem Querträger 4 verschiebbar und gleitend geführt sind.

An der Innenseite der an beiden seitlichen Brückenrändern befindlichen Versteifungen 3 sind die senkrechten Schenkel 11 von winkelförmigen Halterungen 12 befestigt, deren waagerechte Schenkel 13 zur Befestigung von Lagern 14 dienen, die zur Aufnahme einer quer zur Brücke verlaufenden Welle 15 dienen, die waagerecht angeordnet ist. Die Welle 15 trägt im Bereich ihrer Enden ein Zahnrad 16; die beiden somit vorhandenen Zahnräder 16 sind drehfest miteinander verbunden.

An der Innenseite des Querteils 9 befindet sich eine Lagerstelle 17 mit waagerechter Schwenkachse 18 zur Lagerung eines Armes 19, dessen freies Ende sich in Richtung auf die Schwenkachse 6 erstreckt. Unter dem Arm 19 befindet sich eine in Brückenlängsrichtung erstreckende Zahnstange 20, die fest mit dem Arm 19 verbunden ist und deren Verzahnung mit derjenigen des Zahnrades 16 kämmt.

Die Zahnstange 20 liegt frei von oben her auf dem Zahnrad 16 auf, und zwar mit einer Pressung, die durch das Gewicht des Armes 19 und der Zahnstange 20 bestimmt ist. An sich ist dieser Zahneingriff ausreichend, um zu erreichen, dass die Verlängerung 7 bei Längsbewegungen keine Verkantungen erfährt und somit eine wünschenswerte Synchronisation erreicht werden kann. Bei grösseren Zahndrücken ist es jedoch zweckmässig, ein Herausheben der Zahnstange 20 aus der Verzahnung des Zahnrades 16 durch ein stangenförmiges Widerlager 21 auszuschliessen, das quer zur Zahnstange 20 bzw. dem Arm 19 verläuft und an dem senkrechten Schenkel 11 befestigt ist. Das Widerlager 21 liegt nahe oberhalb der Rückenfläche des Armes 19 und verhindert dessen Verschwenkung nach oben.

Diese Art der Verbindung zwischen dem Zahnrad 16 und der Zahnstange 20 ist spielfrei, da die Berührung zwischen diesen Konstruktionsteilen stets sichergestellt ist. Die Lagerung der Zahnstange 20 ist sehr einfach und betriebssicher, sie kann im übrigen bei der Montage der Verlängerung 7 an der Brückenplatte 1 einfach eingeschoben werden, da ihr freies Ende auf das hintere Ende der Brücke zeigt.

**Patentansprüche**

1. Überladebrücke für Rampen mit einer am freien Ende ihrer verschwenkbaren Brückenplatte (1) befindlichen, ein- und ausfahrbaren, zum Aufliegen auf der zu be- bzw. entladenden Plattform dienenden Verlängerung (7), die durch sich in Brückenlängsrichtung erstreckende Führungsglieder an der Brückenplatte verschiebbar gelagert ist, wobei in den beiden Randbereichen der Brückenplatte (1) je eine längs zur Brückenplatte (1) verlaufende Zahnstange (20) vorgesehen ist, mit der je ein Zahnrad kämmt, und wobei ferner beide Zahnräder drehfest miteinander verbunden sind, dadurch gekennzeichnet, dass die Zahnstange (20) im Bereich eines Endes um eine Querachse (18) verschwenkbar ist und frei auf dem zugehörigen Zahnrad (16) aufliegt.

2. Überladebrücke nach Anspruch 1, dadurch gekennzeichnet, dass der Zahnstange (20) ein ein Herausheben aus der Verzahnung des Zahnrades (16) verhinderndes Widerlager (21) zugeordnet ist.

3. Überladebrücke nach Anspruch 2, dadurch gekennzeichnet, dass das Widerlager im Bereich der Rückenfläche der Zahnstange (19) angeordnet ist uns sich quer zur Zahnstange erstreckt.

4. Überladebrücke nach Anspruch 1, dadurch gekennzeichnet, dass das vordere, dem freien Brückenende zugekehrte Ende der Zahnstange (19) verschwenkbar gelagert ist.

5. Überladebrücke nach Anspruch 1 und 4, dadurch gekennzeichnet, dass die Zahnstange (20) an der Verlängerung angelenkt ist.

6. Überladebrücke nach Anspruch 1, dadurch gekennzeichnet, dass die Zahnstange (20) an der Unterseite eines angelenkten Armes (19) befestigt ist.

**Claims**

1. Ramp bridging device, comprising a retractable and extensible extension portion (7), which is disposed on the free end of the pivotable bridge plate (1) of said device and is to be supported on the platform which is to be loaded or unloaded, which extension portion is displaceably mounted on the bridge plate by means of guide members, which extend in the longitudinal direction of the bridging device, wherein a toothed bar (20), which extends longitudinally relative to the bridge plate (1), is provided in each of the two edge regions of the bridge plate (1), a toothed wheel meshing with each toothed bar, and also wherein both toothed wheels are non-rotatably interconnected with each other, characterised in that the toothed bar (20), in the region of one end, is pivotable about a transverse axle (18) and is freely supported on the associated toothed wheel (16).

2. Bridging device according to claim 1, characterised in that the toothed bar (20) has associated therewith a support member (21), which prevents the toothed bar from being lifted out of the toothing of the toothed wheel (16).

3. Bridging device according to claim 2, characterised in that the support member is disposed in the region of the rear surface of the toothed bar (20) and extends transversely relative to the toothed bar.

4. Bridging device according to claim 1, characterised in that the front end of the toothed bar (20), facing the free end of the bridging device, is pivotably mounted.

5. Bridging device according to claims 1 and 4, characterised in that the toothed bar (20) is pivotally mounted on the extension portion.

6. Bridging device according to claim 1, characterised in that the toothed bar (20) is secured to the underside of a pivotally mounted arm (19).

**Revendications**

1. Niveleur de quai ou de rampe, comprenant un prolongement (7) se trouvant à l'extrémité libre de son tablier (1) basculant, pouvant s'escamoter et se déployer, servant à s'appuyer sur la plate-forme à charger ou à décharger et monté coulissant sur le tablier par des éléments de guidage s'étendant dans la direction longitudinale du tablier, des crémaillères (20), dans lesquelles engrènent respectivement des roues dentées, étant prévues dans les régions marginales du tablier (1) et s'étendant le long de celui-ci (1), les deux crémaillères étant reliées sans possibilité de tourner l'une par rapport à l'autre, caractérisé en ce que la crémaillère (20) est montée basculante autour d'un axe transversal (8) dans la région de l'une de ses extrémités et repose librement sur la roue dentée (16) qui lui correspond.

2. Niveleur de quai suivant la revendication 1, caractérisé en ce qu'à la crémaillère (20) est associée une butée (21) l'empêchant de se dégager de la denture de la roue dentée (16).

3. Niveleur de quai suivant la revendication 2, caractérisé en ce que la butée est disposée dans la région de la surface arrière de la crémaillère (19) et s'étend transversalement à la crémaillère.

4. Niveleur de quai suivant la revendication 1, caractérisé en ce que l'extrémité avant de la crémaillère (19), qui est tournée vers l'extrémité libre du niveleur de quai, est montée basculante.

5. Niveleur de quai suivant la revendication 1 ou 4, caractérisé en ce que la crémaillère (20) est articulée au prolongement.

6. Niveleur de quai suivant la revendication 1, caractérisé en ce que la crémaillère (20) est fixée au côté inférieur d'un bras (19) articulé.

Fig. 1

Fig. 2

Fig. 3